(19)

**Europäisches Patentamt**
**European Patent Office**
**Office européen des brevets**

(11) **EP 3 943 253 A1**

(12) **EUROPÄISCHE PATENTANMELDUNG**

(43) Veröffentlichungstag:
**26.01.2022 Patentblatt 2022/04**

(21) Anmeldenummer: **20186730.6**

(22) Anmeldetag: **20.07.2020**

(51) Internationale Patentklassifikation (IPC):
**B25J 9/16** *(2006.01)*    **B25J 9/08** *(2006.01)*

(52) Gemeinsame Patentklassifikation (CPC):
**B25J 9/1671;** G05B 2219/40311

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Meyrath, Wilhelm**
**1220 Wien (AT)**
• **Muhr, Hannes**
**2463 Gallbrunn (AT)**
• **Prankh, Peter**
**2301 Groß-Enzersdorf (AT)**
• **Taucher, Herbert**
**1190 Wien (AT)**

(74) Vertreter: **Maier, Daniel Oliver**
**Siemens AG**
**Postfach 22 16 34**
**80506 München (DE)**

(54) **VERFAHREN ZUR SIMULATION EINES ROBOTERARMS**

(57)    Die Erfindung betrifft ein computergestütztes Verfahren zur Simulation eines Roboterarms (RS) mit zumindest einem Robotergelenk (J1, J2, J3). Dieses Robotergelenk (J1, J2, J3) umfasst zumindest eine Antriebseinrichtung (M1, M2, M3), eine Ansteuereinrichtung (E1, E2, E3) und eine Sensoreinheit (P1, P2, P3). Weiterhin weist das Robotergelenk (J1, J2, J3) zumindest eine elektronische Hardwareeinheit (HW1, HW2, HW3) auf, in welcher wenigstens Regelungsroutinen zur Sensordatenauswertung und zum Generieren von Steuerbefehlen für die zumindest eine Ansteuerungseinrichtung (E1, E2, E3) implementiert sind und auf welcher Softwarekomponenten (SW1, SW2, SW3) für das zumindest eine Robotergelenk (J1, J2, J3) ausgeführt werden. Für die Simulation in einer Integrations- und Testphase wird für das zumindest eine Robotergelenk (J1, J2, J3) ein domänenübergreifendes Modell erstellt (101), durch welches ein elektro-mechanisches Verhalten der Antriebseinrichtung (M1, M2, M3), der Ansteuerungseinrichtung (E1, E2, E3) und der Sensoreinheit (P1,P2, P3) des Robotergelenks (J1, J2, J3) während eines laufenden Betriebs des Roboterarms (RS) beschrieben wird. Aus dem domänenübergreifenden Modell wird eine ablauffähige Simulationsanwendung des zumindest einen Robotergelenks (J1, J2, J3) generiert (102) und in die zumindest eine elektronische Hardwareeinheit (HW1, HW2, HW3) des Robotergelenks (J1, J2, J3) geladen (103). Während der Integrations- und Testphase des Roboterarms (RS) werden dann die Antriebseinrichtung (M1, M2, M3), die Ansteuerungseinrichtung (E1, E2, E3) und die Sensoreinheit (P1,P2, P3) des Robotergelenks (J1, J2, J3) durch die ablauffähige Simulationsanwendung emuliert bzw. durch die ablauffähige Simulationsanwendung als digitaler Zwilling ersetzt (104).

## FIG 2

**Beschreibung**

**Technisches Gebiet**

Die vorliegende Erfindung betrifft ein computergestütztes Verfahren zur Simulation eines Roboterarms mit zumindest einem Robotergelenk. Dieses Ro-botergelenk umfasst zumindest eine Antriebseinrich-tung, zumindest eine Ansteuereinrichtung und zumindest eine Sensoreinheit. Weiterhin weist das Robotergelenk zumindest eine elektronische Hardwareeinheit auf, in welcher wenigstens Regelungsroutinen zur Sensordatenauswertung und zum Generieren von Steuerbefehlen für die zumindest eine Ansteuerungseinrichtung implementiert sind und auf welcher Softwarekomponenten für das zumindest eine Robotergelenk ausgeführt werden.

**Stand der Technik**

Heutzutage werde vor allem im industriellen Bereich autonome technische System wie Roboter zur Durchführung von Arbeiten und zur Manipulation von Objekten verwendet. Roboter, welche insbesondere für einen Einsatz z.B. bei der Handhabung, Montage, Bearbeitung von Werkstücken, etc. im industriellen Umfeld konzipiert wurden, weisen in der Regel eine Steuerung, einen Manipulator bzw. Roboterarm und einen Effektor (z.B. Werkzeug, Greifer, etc.) auf. Weiterhin ist der Roboter bzw. der Roboterarm mit verschiedenen Sensoren (z.B. zum Erfassen der Umwelt, der Achspositionen, etc.) sowie mit Kabel bzw. Leitungen zur Energieversorgung, zur Daten- und Signalübertragung sowie zur Synchronisation der Roboterarmgelenke ausgerüstet.

Ein Roboterarm oder Manipulator stellt in der Robotik jenen Teil des Roboters dar, welche die physikalische Interaktion mit der Umgebung und damit das Aufführen von Manipulationen von Objekten ermöglicht. Der Roboterarm ist der bewegliche Teil des Roboteraufbaus, welche die mechanische Arbeit bzw. die vorgegebenen Arbeitsabläufe durchführt. Dazu besteht der Roboterarm als multifunktionaler Handhabungsautomat aus einer Reihe von starren Gliedern, welche mittels Gelenken - Dreh- und/oder Schubgelenken - verbunden sind.

Ein Robotergelenk weist zum Ausführen von translatorischen und/oder rotatorischen Bewegungen für vorgegebene Arbeitsabläufe zumindest eine Antriebseinrichtung wie z.B. Motor, Getriebe, Bremse, etc. auf, von welcher die jeweilige Gelenksbewegung ausgeführt wird. Der zumindest einen mechanischen Antriebsein-richtung ist eine leistungselektronische Ansteuerungs-einrichtung (z.B. Inverter, Regler, etc.) zugeordnet, durch welche eine direkte Ansteuerung der mechanischen Antriebseinrichtung z.B. mittels entsprechender Ansteuersignale (z.B. Pulsbreitensignal für einen Motor, Bremssignal für eine Bremse, etc.) erfolgt. Weiterhin umfasst ein Gelenksystem in einem Roboterarm zumindest eine Sensoreinheit (z.B. Positions- und/oder Winkelgeber), mit welcher z.B. Positionsdaten im Gelenk digital erfasst werden können.

Zum Auswerten der Sensordaten sowie zum Generieren von Steuerbefehlen für die zumindest eine Ansteuerungseinrichtung auf Basis der Sensordaten können entsprechende Regelungsroutinen für das jeweilige Gelenke des Roboterarms vorgesehen sein. Die Regelungsroutinen des jeweiligen Gelenks können beispielsweise in einer Ansteuerelektronik realisiert sein. Die Ansteuerelektronik kann beispielsweise als zentrale Einrichtung ausgestaltet sein, welche außerhalb des Manipulators angeordnet ist und über welche die Gelenke des Manipulators synchronisiert zentral angesteuert werden. Weiterhin können auf einer derartigen zentralen Einrichtung übergeordnete Steuerungsanwendungen und anwendungsspezifische Applikationen für den Roboterarm ablaufen.

Alternativ oder zusätzlich zu einer zentralen Einrichtung kann die Ansteuerelektronik bei modernen Roboterarchitekturen auch mehrere dezentrale Teilelemente umfassen, welche beispielsweise in die einzelnen Gelenke integriert sein können. Dadurch wird die Rechnerleistung in der zentralen Einrichtung zwar reduziert, muss allerdings zumindest in reduzierter Form in den jeweiligen Gelenken aufgebracht werden. Dazu können die Gelenke zumindest eine elektronische Hardwareeinheit umfassen, in welcher dann lokal die jeweiligen Regelungsroutine zur Sensordatenauswertung und zum Generieren der Steuerbefehle für die zumindest eine An-steuerungseinrichtung des jeweiligen Gelenks imple-mentiert sind. Weiterhin müssen bei einer dezentralen Steuerung des Roboterarms in der elektronischen Hardwareeinheit auch Kommunikationsroutinen für eine Syn-chronisation zwischen den Roboterarmgelenken imple-mentiert sein.

Konventionelle Ansteuerelektronik kann beispielsweise mittels Mikrokontrollern realisiert werden, auf welche gelenksspezifisch angepasste Software für die Regelungsroutinen des Gelenks ablaufen. Mittlerweile kommen allerdings anstatt Mikrokontrollern auch leistungsfähigere, elektronische Hardwareeinheiten wie z.B. programmierbare, integrierte Schaltungen (Field Programmable Gate Arrays (FPGAs), System-on-Chip-Systeme (SoCs) oder eine Kombination aus SoC und FPGA - so genannte SoC-FPGAs) zum Einsatz. Derartige elektronische Hardwareeinheiten bieten beispielsweise die Möglichkeit, die für die Synchronisation der einzelnen Gelenke eines Roboterarms notwendigen Kommunikationsroutinen sowie die Regelungsroutinen zur Sensordatenauswertung und zum Generieren der Steuerbefehle für die zumindest eine Ansteuerungseinrichtung des jeweiligen Gelenks im oder beim jeweiligen Gelenk dezentral direkt - d.h. im programmierbaren Logikteil eines FPGAs oder der FPGA-Einheit eines SoC-FPGAs - zu implementieren. Softwarekomponenten (z.B. Betriebs-system, Robotik-Layer, übergeordnete Steuerungsan-wendungen und gelenkspezifische Applikationen, etc.)

können beispielsweise auf Prozessoreinheiten (z.B. SoC-Multicore System) abgebildet werden, welche z.B. von einem SoC oder einem SoC-Teil eines SoC-FPGAs zur Verfügung gestellt werden.

Die Realisierung derartiger komplexer elektromechanischer Systeme wie z.B. eines Robotiksystems oder eines Roboterarms bedürfen in der Entwicklungs- und Integrationsphase einer umfangreichen und aufwendigen Verifikation, um Probleme bei einer Inbetriebnahme des Robotersystems zu vermeiden. Fehler in der Programmierung der elektronischen Hardwareeinheit bzw. der Regelungsroutinen für Ansteuerungs- und Antriebseinrichtungen und/oder im Zusammenspiel der einzelnen Robotergelenke können beispielsweise zu mechanischen Schäden oder zur Zerstörung von Teilen des Robotiksystems oder zu einer Überlastung einer leistungselektronischen Ansteuerungseinrichtung führen. Weiterhin erfordert der Betrieb eines Robotersystems erhöhte sicherheitstechnische Anforderungen und Maßnahmen - insbesondere, wenn diese als kollaborative Roboter (englisch kurz "Cobots" einsetzbar sein sollen. Diese sicherheitstechnischen Maßnahmen müssen häufig auch während der Entwicklung für eine spätere Zertifizierung des Robotersystems nachgewiesen werden.

Dazu werden zum Testen und für die Verifikation einer sicherheitstechnisch ordnungsgemäßen Funktion eines Robotergelenksystems beispielsweise heutzutage die relevanten Teilsysteme innerhalb eines Gelenkknotens bestmöglich modelliert. D.h. es werden für Teilsysteme eines Robotergelenk - wie z.B. Ansteuerungs- und Kontrollelektronik, Sensorik (Sensoren und Sensordatenauswertung), Aktorik (Motor und Getriebe sowie zugehörige Regelungsroutinen), Kommunikationsroutinen, Prozessoreinheit und Softwarekomponenten wie z.B. Betriebssystem (z.B. Linux, MacOS, Windows), Robotik-Layer (z.B. Robot Operating System (ROS)) und Applikationen - Modelle auf einer meist abstrakten Modellierungsebene oder domänen-separiert erstellt, so dass aufgrund der Abstraktion viele Effekte unberücksichtigt bleiben. Eine domänen-separierte Modellierung bedeutet, dass nur abgegrenzte Teilbereiche aus Elektronik bzw. Leistungselektronik, Mechanik (Kinematik des Roboters) und Software modelliert und für eine Verifikation simuliert werden. Bei einem domänen-separierten Ansatz bleibt damit die Unsicherheit einer korrekten Schnittstellenmodellierung zwischen den einzelnen Domänen bestehen. Es können mit einem derartigen Modell zwar Teilbereiche (z.B. Mechanik bzw. Kinematik (z.B. Motor, Getriebe, etc.), Leitungselektronik (z.B. Ansteuerung/Regler für den Motor und/oder Bremse, etc.), Software-Komponenten (z.B. übergeordnete, Steuerungsroutinen, Synchronisation mit weiteren Gelenken des Roboterarms, Applikationen, etc.)) simuliert und getestet werden, aber eine Simulation und ein Testen des Zusammenspiels des gesamten Robotergelenksystems - d.h. mechanischer und leistungselektronischer Einheiten mit den Software-Komponenten des jeweiligen Robotergelenks sowie in Bezug auf die anderen Gelenke des Roboterarms - ist damit nur bedingt möglich.

**Darstellung der Erfindung**

Der Erfindung liegt daher die Aufgabe zugrunde, ein Verfahren zur Simulation eines Roboterarms anzugeben, welches die genannten Nachteile überwindet. Insbesondere soll ein Simulationsverfahren zur Verfügung gestellt werden, welches auf einfache Weise eine Entwicklung von Robotersystemen in sicherer Umgebung sowie eine bessere Vorhersage des Verhaltens des Roboters im laufenden Betrieb ermöglicht.

Diese Aufgabe wird durch ein computergestütztes Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zur Simulation eines Roboterarms mit zumindest einem Robotergelenk. Dieses Robotergelenk umfasst zumindest eine Antriebseinrichtung, zumindest eine Ansteuereinrichtung und zumindest eine Sensoreinheit. Weiterhin weist das Robotergelenk zumindest eine elektronische Hardwareeinheit auf, in welcher wenigstens Regelungsroutinen zur Sensordatenauswertung und zum Generieren von Steuerbefehlen für die zumindest eine Ansteuerungseinrichtung implementiert sind und auf welcher Softwarekomponenten für das zumindest eine Robotergelenk ausgeführt werden. Für die Simulation in einer Integrations- und Testphase wird für das zumindest eine Robotergelenk ein domänenübergreifendes Modell erstellt, durch welches ein elektro-mechanisches Verhalten der zumindest einen Antriebseinrichtung, der zumindest einen Ansteuerungseinrichtung und der zumindest einen Sensoreinheit des Robotergelenks während eines laufenden Betriebs des Roboterarms beschrieben wird. Aus dem domänenübergreifenden Modell wird eine ablauffähige Simulationsanwendung des zumindest einen Robotergelenks generiert und in die zumindest eine elektronische Hardwareeinheit des Robotergelenks geladen. Während der Integrations- und Testphase des Roboterarms werden dann die zumindest eine Antriebseinrichtung, die zumindest eine Ansteuerungseinrichtung und die zumindest eine Sensoreinheit des Robotergelenks durch die ablauffähige Simulationsanwendung emuliert bzw. durch die ablauffähige Simulationsanwendung als digitaler Zwilling ersetzt.

Der Hauptaspekt der gegenständlichen Erfindung besteht darin, dass sicherheitskritische Teile eines Gelenkssystems (d.h. Antriebseinrichtung, Ansteuereinrichtung und Sensoreinheit bzw. Mechanik, Leistungselektronik und Sensorik) eines Roboterarms während einer Integrations- und Testphase - z.B. beim Entwickeln und Testen von Regelungsroutinen für Sensordatenauswertung und Ansteuerung der Ansteuereinrichtung und/oder von Applikationen zu umgehen, um beispielsweise Schäden an Mechanik und/oder Leistungselektronik durch Fehler in Regelroutinen, etc. zu vermeiden bzw. kritische Gelenks- und/oder Systemzustände zu erkennen. Anstatt der physikalischen Einrichtungen und Einheiten aus den Domänen bzw. Teilbereichen Mechanik (bzw. Kinematik), Leistungselektronik und Sensorik wird das Modell bzw. ein digitaler Zwilling angesteuert, welcher bzw. deren Funktionsweise und Verhalten dieser Teilbereich und damit die gesamte Roboterkinematik nachbildet und in der elektronischen Hardwareeinheit des zumindest einen Gelenks realisiert ist. Damit kann das Robotiksystem auf einfache Weise wie im laufenden Betrieb getestet werden. Die Erfindung bietet damit die Möglichkeit, insbesondere die Regelungsroutinen für die Ansteuerung des Gelenks, Softwarekomponenten des Gelenks wie z.B. übergeordnete Steuerungsanwendungen und Applikationen, eine Synchronisation mit weiteren Gelenken des Roboterarms, etc. in einer sicheren Umgebung entwickeln und testen zu können.

Weiterhin kann das domänenübergreifende Modell bzw. die darauf basierende Simulationsanwendung parallel zur Physik (d.h. zu den physikalischen Einrichtungen und Einheiten von Mechanik, Leistungselektronik und Sensorik) verwendet werden, um beispielsweise ein Verhalten z.B. des Gelenks und/oder des Roboterarms besser vorhersagen zu können oder um die Regelung der zumindest einen Antriebseinrichtung zu unterstützen. Dies kann beispielsweise in Form von model-predictive Control (MPC) erfolgen, um ein zukünftiges Verhalten des Prozesses in Abhängigkeit von Eingangsbefehlen (z.B. Steuerbefehlen der Regelroutinen) zu berechnen.

Für das Simulationsverfahren ist es von Vorteil, wenn während einer Durchführung der Simulationsanwendung die Antriebseinrichtung in einem definierten, sicheren Zustand verbleibt und an die Ansteuerungseinrichtung keine Steuerbefehle übertragen werden. Die Regelungsroutinen für das jeweilige Gelenk, etc., welche in der elektronischen Hardwareeinheit implementiert sind, sowie die Softwarekomponenten, insbesondere Applikationen, welche auf der elektronischen Hardwareeinheit ablaufen, können damit ohne Risiko in einer sicheren Umgebung entwickelt und getestet werden.

Eine zweckmäßige Ausgestaltung der Erfindung sieht vor, dass das domänenübergreifende Modell der Antriebseinrichtung, der Ansteuerungseinrichtung und der Sensoreinheit des Gelenks mittels so genanntem State-Space-Modelling (SSM) bzw. mittels Zustandsraummodellierung realisiert wird. Derartige Modelle sind als ingenieurstechnische Methode insbesondere dazu geeignet, dynamische System im Zeitbereich zu analysieren und zu synthetisieren und Mehrgrößensystem regelungstechnisch zu behandeln. Dabei wird ein physikalisches System mittels eines Parametersatzes aus Eingangs-, Ausgangs- und Zustandsvariablen beschrieben, welche mittels Differenzialgleichungen der ersten Ordnung verknüpft sind. Die Zustandsvariablen sind dabei Variablen, deren Werte sich über die Zeit in Abhängigkeit von ihrem jeweils zeitpunkt-aktuellen Wert und in Abhängigkeit von extern vorgegebenen Werten der Eingangsvariablen entwickeln bzw. verändern. Die Werte der Ausgangsvariablen hängen von den jeweiligen Werten der Zustandsvariablen ab.

Weiterhin ist es günstig, wenn zumindest interne Zustände des Robotergelenks, dessen Roboterkinematik durch das Modell abgebildet bzw. durch die ablauffähige Simulationsanwendung emuliert wird, als Simulationsergebnisse aufgezeichnet werden. Damit können vor allem Zustände des Robotergelenks bzw. der zugehörigen Antriebseinrichtung, Ansteuereinrichtung und/oder Sensoreinheit zugänglich gemacht werden, welche bei einem Betrieb des Gelenks bzw. der physikalischen Einrichtungen und Einheiten gar nicht oder nur schwer zugänglich sind.

Die Simulationsergebnisse können beispielsweise ausgewertet werden und dabei auf erlaubte und nicht erlaubte Zustände des Gelenksystems bzw. des Roboterarms (z.B. Verlassen eines definierten Arbeitsbereichs, Erreichen von mechanischen und/oder leistungselektronischen Belastungsgrenzen, etc.) überprüft werden. Anhand der Auswertung bzw. Überprüfung der Simulationsergebnisse können idealerweise Triggerpunkte definiert werden, durch welche z.B. einem Entwickler und/oder Benutzer des Robotiksystems Fehlersituationen und/oder unerlaubte bzw. kritische Systemzustände angezeigt werden, welche während des Betriebs des Robotergelenks bzw. des Roboterarms auftreten können.

Dabei ist es besonders von Vorteil, wenn die ablauffähige Simulationsanwendung in Echtzeit ausgeführt wird und eine Auswertung und Überprüfung der Simulationsergebnisse in Echtzeit erfolgt. Die Simulationsergebnisse können dann ebenfalls in Echtzeit visualisiert werden. Die Echtzeit-Auswertung und Echtzeit-Visualisierung der Simulationsergebnisse, insbesondere der internen Zustände von Antriebseinrichtung (z.B. Motor, Getriebe, Bremse, etc. - d.h. Mechanik) und Ansteuereinrichtung (z.B. Inverter, Regler, etc. - Leistungselektronik zur Ansteuerung der Mechanik) erleichtert die Entwicklung des jeweiligen Gelenksystems bzw. des Roboterarms.

Eine bevorzugte Ausgestaltung der Erfindung sieht vor, dass als elektronische Hardwareeinheit ein so genanntes Field Programmable Gate Array (FPGA) in Kombination mit einem Systemon-Chip-System (SoC) verwendet wird. Dabei können das FPGA und das SoC-System als getrennte Hardware-Bauteile ausgeführt sein, wobei beispielsweise die Regelungsroutinen für die Leistungselektronik des Robotergelenks sowie die für die Synchronisation der einzelnen Gelenke eines Roboterarms notwendigen Kommunikationsroutinen im programmierbaren Teil des FPGAs implementiert sind. Das SoC-System stellt die Hardware (z.B. Prozessoren, Multicore-System) zur Verfügung, auf welcher die Softwarekomponenten des Robotergelenks ablaufen bzw. abgebildet werden. FPGA und SoC-System können aber auch in einer Hardwareeinheit integriert sein - d.h. als so genannter SoC-FPGA ausgeführt sein. Auch beim SoC-FPGA sind die Regelungs- und Kommunikationsroutinen im programmierbaren Teil des FPGAs implementiert und die Softwarekomponenten des Robotergelenks (z.B. übergeordnete Steuerungsanwendungen, Applikationen) laufen auf dem SoC-System des SoC-FPGA ab.

Vor allem die Verwendung eines FPGAs als zumindest Bestandteil der elektronischen Hardwareeinheit des Robotergelenks bieten den Vorteil, dass heutzutage FPGAs derart leistungsfähig sind, dass elektro-mechanische Systeme - wie die Roboterkinematik umfassend zumindest eine Antriebseinrichtung, eine Ansteuereinrichtung und eine Sensoreinheit eines Robotergelenks - mit genügend hoher zeitlicher Auflösung, Genauigkeit und Detailtreue als domänenübergreifendes Modell abgebildet als entsprechende ablauffähige Simulationsanwendung im FPGA implementiert und in Echtzeit ausgeführt werden kann.

**Kurzbeschreibung** der Zeichnung

Die Erfindung wird nachfolgend in beispielhafter Weise anhand der beigefügten Figuren erläutert. Dabei zeigen:

Figur 1    schematisch einen beispielhaften Roboterarm mit mehreren Gelenken

Figur 2    schematisch einen beispielhaften Ablauf des erfindungsgemäßen Verfahrens zur Simulation eines Roboterarms

**Ausführung der Erfindung**

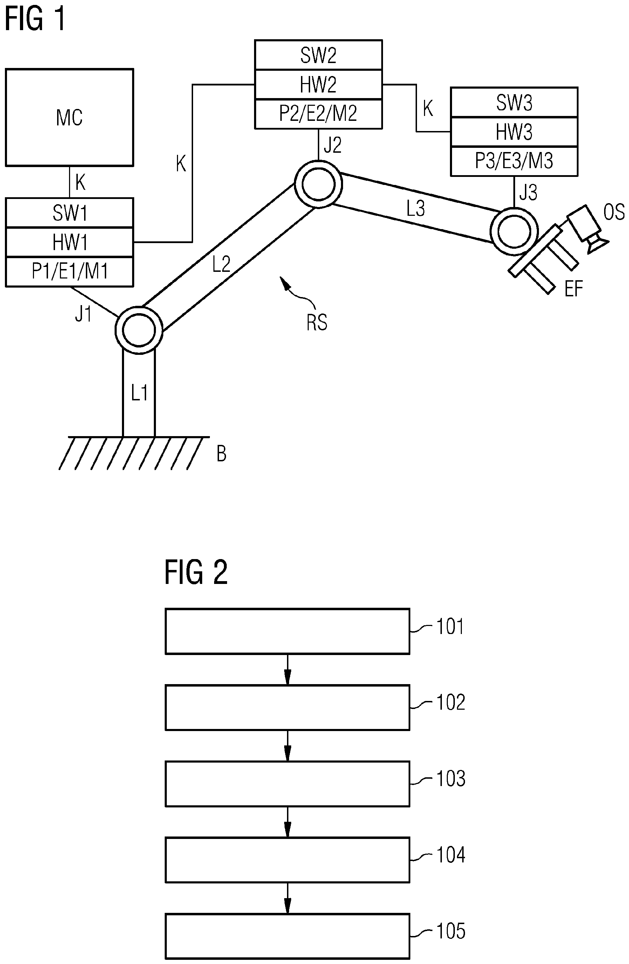

Figur 1 zeigt schematisch in beispielhafter Weise einen Roboter bzw. den Manipulator oder Roboterarm RS eines Roboters, dessen Gelenke J1 bis J3 mit dem erfindungsgemäßen Verfahren z.B. während einer Integrations- und Testphase simuliert werden können. Der beispielhaft dargestellte Roboterarm umfasst eine Reihe von starren Gliedern L1 bis L3, welche durch die Robotergelenke J1 bis J3 verbunden sind. Die Gelenke J1 bis J3 können beispielsweise als translatorische und/oder rotatorische Gelenke bzw. als Schub- und/oder Drehgelenke ausgeführt sein, wobei durch die Gelenke J1 bis J3 die translatorischen und rotatorischen Achsen vorgegeben werden, durch deren Anzahl und Anordnung Form und Größe eines Arbeitsraums des Roboterarms RS definiert wird.

Ein erstes Gelenk J1 ist beispielsweise über ein erstes Glied L1 mit einer Basis B verbunden. Ein zweites und drittes Glied L2, L3 sind z.B. über ein zweites Robotergelenk J2 miteinander verbunden. Ein drittes Gelenk J3 verbindet beispielsweise einen Effektor EF mit dem dritten Glied L3, wobei der Effektor EF ein freibewegliches Ende des Roboterarms RS darstellt und beispielsweise ein Werkzeug oder einen Greifer und gegebenenfalls einen optischen Sensor OS zur Durchführung der jeweiligen Arbeitsabläufe aufweisen kann.

Zum Ausführen der translatorischen und/oder rotatorischen Bewegungen für die jeweiligen Arbeitsabläufe weist jedes einzelne Gelenk J1 bis J3 zumindest eine Antriebseinrichtung M1, M2, M3 auf. Antriebseinrichtungen M1, M2, M3 sind z.B. Motoren inklusive Getriebe, durch welche das Gelenk J1, J2, J3 des Roboterarms gedreht oder translatorisch bewegt wird, oder eine Bremseinrichtung, durch welche eine Bewegung abgestoppt wird. Weiterhin ist in jedem Gelenk J1, J2, J3 der jeweiligen Antriebseinrichtung M1, M2, M3 eine leistungselektronische Ansteuerungseinrichtung E1, E2, E3 zugeordnet, durch welche eine direkte Ansteuerung der mechanischen Antriebseinrichtung M1, M2, M3 z.B. mittels entsprechender Ansteuersignale (z.B. Pulsbreitensignal für einen Motor, Bremssignal für eine Bremse, etc.) erfolgt. Derartige leistungselektronische Ansteuerungseinrichtungen E1, E2, E3 sind z.B. Inverter, Regler, etc. Weiterhin umfasst ein Gelenksystem J1, J2, J3 in einem Roboterarm RS zumindest eine Sensoreinheit P1, P2, P3 (z.B. Positions- und/oder Winkelgeber), mit welcher z.B. Positionsdaten im Gelenk digital erfasst werden können.

Zur automatischen Ansteuerung des Roboterarms RS ist eine Steuerung vorgesehen, welche z.B. eine zentrale Steuereinheit MC und mehrere dezentrale Teilelemente umfassen kann, welche beispielsweise in die einzelnen Gelenke J1 bis J3 integriert sein können. Die zentrale Steuereinheit MC kann sich - wie beispielhaft in Figur 1 dargestellt - außerhalb des Manipulators RS befinden. In die Gelenke J1, J2, J3 sind beispielsweise elektronische Hardwareeinheiten HW1, HW2, HW3 integriert. In diesen elektronischen Hardwareeinheiten HW1, HW2, HW3 sind beispielsweise Regelungsroutine zur Sensordatenauswertung und zum Generieren der Steuerbefehle für die zumindest eine Ansteuerungseinrichtung E1, E2, E3 des jeweiligen Gelenks J1, J2, J3 implementiert. Weiterhin können in der elektronischen Hardwareeinheit HW1, HW2, HW3 auch Kommunikationsroutinen für eine Synchronisation der Roboterarmgelenke J1, J2, J3 und für eine Kommunikation mit der zentralen Steuereinheit MC implementiert sein. Die Synchronisation und Kommunikation kann z.B. mittels performanter Echtzeitkommunikation K - beispielsweise durch so genanntes Time-Sensitive Networking oder kurz: TSN erfolgen.

Weiterhin können auf der elektronischen Hardwareeinheit HW1, HW2, HW3 Softwarekomponenten SW1, SW2, SW3 für das jeweilige Robotergelenk J1, J2, J3 abgebildet. Derartige Softwarekomponenten SW1, SW2, SW3 können beispielsweise übergeordnete, gelenkspezifische Steuerungsroutinen und Applikationen umfassen, welche z.B. auf einem Betriebssystem (z.B. Linux, MacOS, etc.) und einem Robotik-Layer (z.B. Robot Operating System (ROS)) ablaufen.

Als elektronische Hardwareeinheit HW1, HW2, HW3 kann beispielsweise eine Kombination aus einem FPGA und einem SoC als getrennte elektronische Bauelemente oder ein so genannter SoC-FPGA, welcher FPGA- und Prozessorarchitektur in einem elektronischen Bauteil integriert, eingesetzt werden. Dabei können beispielsweise die Regelroutinen für Sensorik und Aktorik (z.B. Sensordatenauswertung, Steuerbefehlserstellung für die Leistungselektronik E1, E2, E3) sowie die Kommunikationsroutinen für die Synchronisation mit anderen Robotergelenken J1, J2, J3 im frei programmierbaren Logikteils des FPGAs implementiert sein. Darüberliegende Steuerungsroutinen, Applikationen, etc. werden z.B. als Softwarekomponenten SW1, SW2, SW3 auf dem SoC-Multicore-System abgebildet bzw. ausgeführt.

In Figur 2 wird beispielhaft ein Ablaufdiagramm des erfindungsgemäßen Verfahrens zur computergestützten Simulation eines in Figur 1 beispielhaft dargestellten Roboterarms gezeigt.

In einem Modellierungsschritt 101 werden für die jeweiligen Robotergelenke J1, J2, J3 des Roboterarms RS domänenübergreifende Modelle erstellt. Domänenübergreifend bedeutet, dass bei der Abstraktion des Gelenks J1, J2, J3 bzw. bei der Modellbildung unterschiedliche Domänen des Gelenks J1, J2, J3 wie z.B. Mechanik bzw. Kinematik, Leistungselektronik zur direkten Ansteuerung der Mechanik und Sensorik berücksichtigt werden. Im Modellierungsschritt 101 werden die Antriebseinrichtung M1, M2, M3 (z.B. Motor, Getriebe, Bremse, etc.), Ansteuerungseinrichtung E1, E2, E3 (z.B. Regler, Inverter, etc.) und die zumindest eine Sensoreinheit P1, P2, P3 (z.B. Positionsgeber, etc.) des jeweiligen Gelenks J1, J2, J3 des Roboterarms RS derart abstrahiert, dass ein elektro-mechanisches Verhalten bzw. ein elektro-mechanisches Zusammenwirken von Antriebseinrichtung M1, M2, M3, Ansteuerungseinrichtung E1, E2, E3 und der zumindest einen Sensoreinheit P1, P2, P3 des jeweiligen Robotergelenk J1, J2, J3 beschrieben bzw. nachgebildet wird.

Das domänenübergreifende Modell, in welchem ein elektro-mechanisches Zusammenwirken von Antriebseinrichtung M1, M2, M3, Ansteuerungseinrichtung E1, E2, E3 und der Sensorik P1, P2, P3 des Gelenks J1, J2, J3 abgebildet wird, wird beispielsweise mittels so genanntem State-Space-Modelling (SSM) realisiert. Dabei werden lineare bzw. in Teilen lineare Systeme durch ein Differenzialgleichungssystem wie z.B.

$$\dot{x}(t) = A(t)x(t) + B(t)u(t)$$

$$y(t) = C(t)x(t) + D(t)u(t)$$

beschreiben, wobei die Variable x einen Zustand, die Variable u Eingangsgrößen und die Variable y Ausgangsgrößen beschreibt. Die Zustandsvariablen x sind dabei Variablen, deren Werte sich über die Zeit t in Abhängigkeit von ihrem jeweils zeitpunkt-aktuellen Wert x(t) und in Abhängigkeit von extern vorgegebenen Werten der Eingangsvariablen u entwickeln bzw. verändern. Die Werte der Ausgangsvariablen y hängen von den jeweiligen Werten x(t) der Zustandsvariablen x ab. Nach einer Diskretisierung kann ein derartiges Gleichungssystem z.B. mittels Matrizenmultiplikation mit so genannten State-Space-Matrizen A, B, C, D gelöst werden. Die domänenübergreifende Modellierung des derartigen Gelenksystems J1, J2, J3 bzw. eine Entwicklung des entsprechenden State-Space-Models kann beispielsweise mit Hilfe von Entwicklungstools wie z.B. Simulink gegebenenfalls unter Verwendung von Erweiterungen wie z.B. Simscape, PLECS®, etc. für die Modellbildung von Leistungselektronik und Mechanik erfolgen.

In einem Generierungsschritt 102 wird auf Basis des domänenübergreifenden Modells, welches die mechanischen und leistungselektronischen Einrichtungen M1, M2, M3, E1, E2, E3 sowie die zumindest eine Sensoreinheit P1, P2, P3 des Robotergelenks J1, J2, J3 repräsentieren, eine ablauffähige Simulationsanwendung des elektro-mechanischen Verhaltens des Robotergelenks J1, J2, J3 erstellt. Dazu kann z.B. das domänenübergreifende Modell bzw. das State-Space-Modell aus der für die Modellierung genutzten Entwicklungsumgebung (z.B. Simulink in Kombination mit Simscape oder PLECS®) beispielsweise in eine Datenstruktur übergeleitet werden, von welcher z.B. unterschiedliche Zustände der gesamten Roboterkinematik - d.h. Zustände der Antriebseinrichtung M1, M2, M3, wie z.B. Motor, Getriebe, Bremse, etc., unter Berücksichtigung der Zustände der Ansteuerungseinrichtung E1, E2, E3 (z.B. Zustände von Regler, Inverter, um z.B. das entsprechende Pulsweitensignal, Bremssignal, etc. für die Antriebseinrichtung M1, M2, M3 zu liefern) und der Sensoreinheit P1, P2, P3 - beschrieben werden. Diese Datenstruktur kann beispielsweise genutzt werden, um ein generisches Rechenwerk zu erzeugen, welches dafür geeignet ist, z.B. mittels Codeerzeugung durch eine Hardwarebeschreibungssprache (z.B. VHDL, Verilog, etc.) in eine ablauffähige Simulationsanwendung übergeführt zu werden. In Abhängigkeit von den jeweiligen Anforderungen an die ablauffähige Simulationsanwendung (z.B. Zeitauflösung, Modellgenauigkeit, etc.) und der Komplexität des domänenübergreifenden Modells können sich unterschiedlich aufwendige Rechenwerke im Bezug Ressourcenbedarf und Timing ergeben. Die aus dem Rechenwerk abgeleitete ablauffähige Simulationsanwendung stellt einen digitalen Zwilling bzw. Digital Twin der mechanischen, leistungselektronischen und sensortechnischen Komponenten - d.h. der zumindest einen Antriebseinrichtung M1, M2, M3, der zumindest einen Ansteuereinrichtung E1, E2, E3 und der zumindest einen Sensoreinheit P1, P2, P3 des Robotergelenks J1, J2, J3 dar und kann das Verhalten bzw. die Funktionsweise dieser Robotergelenkskomponenten M1, M2, M3, E1, E2, E3, P1, P2, P3 nachbilden.

In einem Implementierungsschritt 103 wird dann die ablauffähige Simulationsanwendung in die zumindest eine elektronische Hardwareeinheit HW1, HW2, HW3 des Robotergelenks J1, J2, J3 geladen. Das bedeutet, die ablauffähige Simulationsanwendung wird beispielsweise im Logikteil des FPGAs der elektronischen Hardwareeinheit HW1, HW2, HW3 neben z.B. den Regelungsroutinen zur Sensordatenauswertung und zum Generieren der Steuerbefehle für die Ansteuerungseinheit E1, E2, E3 sowie den Kommunikationsroutinen implementiert. Insbesondere heutige FPGAs sind leistungsfähig genug, um das elektro-mechanische System aus Antriebseinrichtung M1, M2, M3, Ansteuerungseinrichtung E1, E2, E3 und Sensoreinheit P1, P2, P3 als ablauffähige Simulationsanwendung mit genügend hoher zeitlicher Auflösung, Genauigkeit und Detailtreue abbilden zu können.

In einem Simulationsschritt 104, welcher z.B. in einer Integrations- und Testphase des Roboterarms RS durchgeführt werden kann, werden dann von der ablauffähigen Simulationsanwendung die zumindest eine Antriebseinrichtung M1, M2, M3, die zumindest eine Ansteuereinrichtung E1, E2, E3 und die zumindest eine Sensoreinheit P1, P2, P3 des jeweils Robotergelenks J1, J2, J3 bzw. das elektro-mechanische Verhalten dieser Einrichtungen M1, M2, M3, E1, E2, E3, P1, P2, P3 des jeweils Robotergelenks J1, J2, J3 von der ablauffähigen Simulationsanwendung emuliert. Damit kann die gesamte Roboterkinematik in ihrer Funktionsweise wie im laufenden Betrieb des Roboterarms RS nachgeahmt werden, ohne dass während der Durchführung der ablauffähigen Simulationsanwendung Steuerbefehle, welche von den Regelroutinen für die Leistungselektronik erzeugt werden, an die Ansteuerungseinheiten E1, E2, E3 des jeweiligen Robotergelenks J1, J2, J3 übertragen werden. Weiterhin verbleibt die Antriebseinrichtung M1, M2, M3 des jeweiligen Robotergelenks J1, J2, J3 in einem definierten, sicheren Zustand. D.h. sicherheitskritische Teile wie z.B. Antriebseinrichtung M1, M2, M3, Ansteuerungseinrichtung E1, E2, E3, Sensoreinheit P1, P2, P3 des jeweiligen Gelenkssystems J1, J2, J3 des Roboterarms RS werden im Simulationsschritt 104 umgangen und stattdessen die ablauffähige Simulationsanwendung angesteuert. Dabei können beispielsweise die in der elektronischen Hardwareeinheit HW1, HW2, HW3 des jeweiligen Gelenks J1, J2, J3 implementierten Regelungs- und Kommunikationsroutinen getestet, Fehler korrigiert und/oder weiterentwickelt werden. Weiterhin besteht die Möglichkeit im Simulationsschritt 104 die auf der Hardwareeinheit HW1, HW2, HW3 des jeweiligen Gelenks J1, J2, J3 laufenden Softwarekomponenten (z.B. übergeordnete Steuerungsroutinen, Applikationen) zu testen und zu entwickeln.

Während des Simulationsschrittes 104 können beispielsweise interne Zustände des jeweiligen Robotergelenks J1, J2, J3 als Simulationsergebnisse aufgezeichnet werden, welche bei einem Durchlauf des physikalischen Gelenkssystem nicht oder nur schwer ersichtlich sein können. In einem Auswertungsschritt 105 können diese Systemzustände des jeweiligen Robotergelenks J1, J2, J3 visualisiert und auf z.B. erlaubte und nicht erlaubte bzw. kritische Systemzustände überprüft werden. Ein derartiger kritischer Systemzustand ist beispielsweise das Verlassen des definierten Arbeitsbereichs durch den Roboterarm RS, welches z.B. zu mechanischen Schäden am Roboterarm RS und/oder sicherheitstechnischen Problemen (z.B. Gefährdung von Bediener, etc.) führen kann. Ein weiterer kritischer Systemzustand wäre auch z.B. die Überlastung einer der leistungselektronischen Komponenten E1, E2, E3 des Gelenks J1, J2, J3.

Für im Simulationsschritt 104 bzw. im Auswertungsschritt 105 erkannte kritische Systemzustände des Robotergelenks J1, J2, J3 können beispielsweise Triggerpunkte definiert werden. Die Triggerpunkte können beispielsweise von einem Entwickler in der Integrations- und Testphase in die Regelroutinen und/oder Softwarekomponenten SW1, SW2, SW3 gelenksspezifisch eingebracht werden, um z.B. während eines laufenden Betriebs des Roboterarms RS kritische Systemzustände und/oder Fehlersituationen so rasch wie möglich erkennen zu können.

Die ablauffähige Simulationsanwendung kann im Simulationsschritt 104 in Echtzeit ausgeführt werden. Weiterhin können eine Auswertung und Visualisierung der Simulationsergebnisse ebenfalls in Echtzeit erfolgen. Die Echtzeitfähigkeit der Simulation des jeweiligen Robotergelenks J1, J2, J3 wird idealerweise durch Verwendung von leistungsfähigen, schnellen elektronischen Bausteinen wie z.B. FPGAs oder SoC-FPGAs erreicht.

## Patentansprüche

1.  Computergestütztes Verfahren zur Simulation eines Roboterarms (RS) mit zumindest einem Robotergelenk (J1, J2, J3), welches zumindest eine Antriebseinrichtung (M1, M2, M3), zumindest eine Ansteuereinrichtung (E1, E2, E3), zumindest eine Sensoreinheit (P1, P2, P3) und zumindest eine elektronische Hardwareeinheit (HW1, HW2, HW3) aufweist, in welcher wenigstens Regelungsroutinen zur Sensordatenauswertung und zum Generieren von Steuerbefehlen für die zumindest eine Ansteuerungseinrichtung implementiert sind und auf welcher Softwarekomponenten (SW1, SW2, SW3) für das zumindest eine Robotergelenk (J1, J2, J3) ausgeführt werden, *dadurch gekennzeichnet, dass* für das zumindest eine Robotergelenk (J1, J2, J3) ein domänenübergreifendes Modell erstellt wird (101), durch welches ein elektro-mechanisches Verhalten der zumindest einen Antriebseinrichtung (M1, M2, M3), der zumindest einen Ansteuerungseinrichtung (E1, E2, E3) und der zumindest einen Sensoreinheit (P1, P2, P3) des Robotergelenks (J1, J2, J3) während eines laufenden Betriebs des (RS) beschrieben wird, dass aus dem domänenübergreifendes Modell eine ablauffähige Simulationsanwendung des zumindest einen Robotergelenks (J1, J2, J3) generiert wird (102), dass die ablauffähige Simulationsanwendung in die zumindest eine elektronische Hardwareeinheit (HW1, HW2, HW3) des Robotergelenks (J1, J2, J3) geladen wird (103), und dass während einer Integrations- und Testphase des Roboterarms (RS) die zumindest eine Antriebseinrichtung (M1, M2, M3), die zumindest eine Ansteuerungseinrichtung (E1, E2, E3) und die zumindest eine Sensoreinheit (M1, M2, M3) des Robotergelenks (P1, P2, P3) durch die ablauffähige Simulationsanwendung emuliert werden (104).

2. Verfahren nach Anspruch 1, **_dadurch gekennzeichnet, dass_** während einer Durchführung der ablauffähigen Simulationsanwendung die Antriebseinrichtung (M1, M2, M3) in einem definierten, sicheren Zustand verbleibt und an die Ansteuerungseinrichtung (E1, E2, E3) keine Steuerbefehle übertragen werden (104).

3. Verfahren nach einem der vorangegangenen Ansprüche, **_dadurch gekennzeichnet, dass_** das domänenübergreifendes Modell der Antriebseinrichtung (M1, M2, M3), der Ansteuerungseinrichtung (E1, E2, E3) und der Sensoreinheit (P1, P2, P3) des Gelenks (J1, J2, J3) mittels so genanntem State-Space-Modelling realisiert wird (101).

4. Verfahren nach einem der vorangegangenen Ansprüche, **_dadurch gekennzeichnet, dass_** zumindest interne Zustände des Robotergelenks (J1, J2, J3) als Simulationsergebnisse aufgezeichnet werden (104).

5. Verfahren nach einem der vorangegangenen Ansprüche, **_dadurch gekennzeichnet, dass_** anhand der Simulationsergebnisse Triggerpunkte definiert werden (105), anhand welcher kritische Systemzustände während eines laufenden Betriebs des Roboterarms (RS) erkannt werden können.

6. Verfahren nach einem der vorangegangenen Ansprüche, **_dadurch gekennzeichnet, dass_** die ablauffähige Simulationsanwendung in Echtzeit ausgeführt wird (104) und eine Auswertung der Simulationsergebnisse in Echtzeit durchgeführt wird (105).

7. Verfahren nach einem der vorangegangenen Ansprüche, **_dadurch gekennzeichnet, dass_** die Simulationsergebnisse visualisiert werden (105).

8. Verfahren nach einem der vorangegangenen Ansprüche, **_dadurch gekennzeichnet, dass_** als elektronische Hardwareeinheit (HW1, HW2, HW3) ein so genanntes Field Programmable Gate Array in Kombination mit einem System-on-Chip-System verwendet wird.

## FIG 1

MC

K

SW1
HW1
P1/E1/M1

J1

L1

B

K

K

SW2
HW2
P2/E2/M2

J2

L2

L3

K

SW3
HW3
P3/E3/M3

J3

OS

EF

RS

## FIG 2

101

102

103

104

105

Europäisches
Patentamt

European
Patent Office

Office européen
des brevets

**EUROPÄISCHER RECHERCHENBERICHT**

Nummer der Anmeldung

EP 20 18 6730

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 476 545 A1 (CREAHOLIC SA [CH]) 1. Mai 2019 (2019-05-01) * Abbildungen 6,7 * * Absatz [0087] * * Absatz [0121] * * Absatz [0130] - Absatz [0132] * * Absatz [0149] * * Absatz [0151] * * Absatz [0156] * * Absatz [0269] * * Absatz [0276] - Absatz [0277] * ----- | 1-8 | INV. B25J9/16 ADD. B25J9/08 |
| A | AZAD MADNI ET AL: "Leveraging Digital Twin Technology in Model-Based Systems Engineering", SYSTEMS, Bd. 7, Nr. 1, 30. Januar 2019 (2019-01-30) , Seite 7, XP055670189, DOI: 10.3390/systems7010007 * Seite 3 * * Seite 5 * ----- | 1-8 | |

RECHERCHIERTE SACHGEBIETE (IPC)

B25J
G05B

Der vorliegende Recherchenbericht wurde für alle Patentansprüche erstellt

| Recherchenort | Abschlußdatum der Recherche | Prüfer |
|---|---|---|
| Den Haag | 26. November 2020 | Antonopoulos, A |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 6730

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2020

| Im Recherchenbericht angeführtes Patentdokument | Datum der Veröffentlichung | Mitglied(er) der Patentfamilie | Datum der Veröffentlichung |
|---|---|---|---|
| EP 3476545 A1 | 01-05-2019 | CN 111386178 A<br>EP 3476545 A1<br>EP 3691835 A1<br>KR 20200077523 A<br>WO 2019081661 A1 | 07-07-2020<br>01-05-2019<br>12-08-2020<br>30-06-2020<br>02-05-2019 |

Für nähere Einzelheiten zu diesem Anhang : siehe Amtsblatt des Europäischen Patentamts, Nr.12/82